# EUROPEAN PATENT SPECIFICATION

(11) **EP 4 142 400 B1**
(45) Date of publication and mention of the grant of the patent: **27.08.2025**
(21) Application number: 21804449.3
(22) Date of filing: 12.05.2021
(51) Int. Cl.: H04W 72/04, H04W 72/0453

(54) **RESOURCE DETERMINATION METHOD AND APPARATUS**
VERFAHREN UND VORRICHTUNG ZUR RESSOURCENBESTIMMUNG
PROCÉDÉ ET APPAREIL DE DÉTERMINATION DE RESSOURCES

(30) Priority: 15.05.2020 CN 202010418041
(43) Date of publication of application: 01.03.2023
(73) Proprietor: Huawei Technologies Co., Ltd., Shenzhen, Guangdong 518129 (CN)
(72) Inventor: WEN, Ronghui, Shenzhen, Guangdong 518129 (CN); YU, Zheng, Shenzhen, Guangdong 518129 (CN)
(74) Representative: Pfenning, Meinig & Partner mbB
(86) International application number: PCT/CN2021/093225
(87) International publication number: WO 2021/228117

(56) References cited:
- WO-A1-2017/030393
- WO-A1-2019/096254
- WO-A1-2019/096254
- CN-A- 109 788 563
- CN-A- 110 166 209
- CN-A- 110 447 288
- CN-A- 111 052 834
- US-A1- 2019 373 635
- NOKIA, NOKIA SHANGHAI BELL: "On remaining details of BWPs", 3GPP DRAFT; R1-1800552 ON REMAINING ASPECTS OF BWPS_NOK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Vancouver, Canada; 20180122 - 20180126, 12 January 2018 (2018-01-12), Mobile Competence Centre ; 650, route des Lucioles ; F-06921 Sophia-Antipolis Cedex ; France , XP051384384

## Description

### TECHNICAL FIELD

The present invention relates to the field of communication technologies, and specifically, to a resource determining method and apparatus.

### BACKGROUND

With increasing device types, some devices different from conventional user equipment (User Equipment, UE) emerge, for example, a computer and a mobile phone. Compared with the conventional UE, these devices have low complexity, a small quantity of transceiver antennas, low UE bandwidth, a relaxed processing timeline (a time for responding to a base station becomes longer), and a reduced processing capability. These devices are collectively referred to as reduced capability UE (NR reduced capability UE, REDCAP UE).

Bandwidth supported by the REDCAP UE is limited. Data may be possibly transmitted only within a bandwidth range of 20 MHz, 10 MHz, or 5 MHz. If serious interference occurs on a current frequency domain resource (for example, neighboring cell interference occurs) or frequency domain resources are insufficient (many REDCAP UEs receive services on the frequency domain resource), the base station may switch the frequency domain resource of the REDCAP UE to another frequency domain resource, to avoid interference or implement load balancing.

Currently, that the base station switches a frequency domain resource of the conventional UE needs to be implemented through bandwidth part (bandwidth part, BWP) switching. However, a BWP switching process requires a specific switch delay, and the REDCAP UE does not send or receive data in the BWP switching process. If the base station also switches the frequency domain resource of the REDCAP UE through BWP switching, a communication process of the REDCAP UE is affected, and consequently, communication efficiency of the REDCAP UE is low.

US 2019/373635 A1 discloses a method including: acquiring predefined information; determining, according to the predefined information, whether to perform a listen-before-talk (LBT) mechanism before transmission; and when LBT indication information is carried in the predefined information, performing the LBT mechanism before a transmission device performs transmission according to a predetermined transmission mode, or when the LBT indication information is not carried in the predefined information, performing a predetermined non-LBT processing operation before the transmission device performs the transmission according to the predetermined transmission mode.

WO 2019/096254 A1 discloses a technique including sending information with an indication of a BWP capability of a user equipment (UE) to a base station (BS). A configuration from the BS indicating a set of BWPs available to use for communication is received in response to the indication. Communications are performed on at least one of the set of BWPs.

### SUMMARY

The present invention is set out in the appended set of claims. According to a first aspect, this application provides a resource determining method. The method may be performed by a terminal device or a chip applied to a terminal device. The following provides descriptions by using an example in which the method is performed by a terminal device. The terminal device receives first indication information, where the first indication information indicates the terminal device to determine a frequency domain resource in a first manner, the first manner includes one of frequency domain resource switching, frequency domain resource retuning, frequency hopping, a manner A, and/or a manner B, the manner A includes the frequency domain resource switching and the frequency hopping, and the manner B includes the frequency domain resource retuning and the frequency hopping. The terminal device communicates with a network device on the determined frequency domain resource.

A frequency domain resource change time corresponding to the frequency domain resource switching is longer than a frequency domain resource change time corresponding to the frequency domain resource retuning.

According to a second aspect, this application provides a resource determining method. The method may be performed by a network device or a chip applied to a network device. The following provides descriptions by using an example in which the method is performed by a network device. The network device sends first indication information, where the first indication information indicates a terminal device to determine a frequency domain resource in a first manner, the first manner includes one of frequency domain resource switching, frequency domain resource retuning, frequency hopping, a manner A, and/or a manner B, the manner A includes the frequency domain resource switching and the frequency hopping, and the manner B includes the frequency domain resource retuning and the frequency hopping; and communicates with the terminal device on the frequency domain resource.

It can be learned that, in this embodiment of this application, the first indication information indicates the terminal device to determine the frequency domain resource in the first manner, and a change manner adapting to a current frequency domain resource change requirement may be obtained, instead of simply performing BWP switching, thereby improving flexibility for changing a frequency domain resource by the terminal device. In addition, the terminal device changes the frequency domain resource according to the adapted change manner, so that the frequency domain resource can be quickly changed, thereby reducing a delay for changing the frequency domain resource, and improving communication efficiency. For example, if the terminal device urgently needs to transmit data currently, the terminal device may be indicated to change the frequency domain resource through frequency domain resource retuning. Therefore, the terminal device can quickly change the frequency domain resource, to meet a transmission requirement. If the terminal device does not have an urgent data transmission requirement, for example, the terminal device is only to listen to a downlink channel by changing the frequency domain resource, the terminal device may be indicated to change the frequency domain resource through frequency domain resource switching, to meet a data transmission requirement.

In a possible implementation of the first aspect or the second aspect, the first indication information is downlink control information DCI.

It can be learned that, in this implementation, that the first indication information indicates the terminal device to determine the frequency domain resource in the first manner includes: The first indication information is used to indicate first duration, and the terminal device is indicated, based on the first duration and a first threshold, to determine the frequency domain resource in the first manner. It can be learned that, in this implementation, when the first indication information is the DCI, the DCI already includes an indication field corresponding to the first duration. Therefore, a change manner may be indicated by an existing field in the DCI, and no new field needs to be added to the DCI, thereby further reducing signaling overheads.

In an implementation of the first aspect or the second aspect, the first indication information is used to indicate a parameter of the frequency domain resource, and the parameter of the frequency domain resource indicates the terminal device to determine the frequency domain resource in the first manner. It can be learned that the terminal device may determine the frequency domain resource in the first manner. For example, when the first manner is the frequency domain resource retuning, the terminal device can quickly communicate with the network device on the determined frequency domain resource, thereby reducing a switch delay and improving communication efficiency.

In an implementation of the first aspect or the second aspect, the parameter of the frequency domain resource is an index of a second frequency domain resource, or is location indication information of the second frequency domain resource; or the parameter is a frequency hopping interval, where the frequency hopping interval is used to indicate the terminal device to perform frequency hopping on a first frequency domain resource before determining the frequency domain resource in the first manner; or the change manner includes the manner A, and the parameter of the frequency domain resource is an index of the frequency domain resource and a frequency hopping interval, where the frequency hopping interval is used to indicate to perform frequency hopping on the frequency domain resource; or the change manner includes the manner B, and the parameter of the frequency domain resource is location indication information of the frequency domain resource and a frequency hopping interval, where the frequency hopping interval is used to indicate to perform frequency hopping on the frequency domain resource.

In a possible implementation of the first aspect or the second aspect, the frequency domain resource includes at least one of the following: a bandwidth part BWP, a carrier, a subcarrier, or a subband.

In a possible implementation of the first aspect or the second aspect, the frequency domain resource change time corresponding to the frequency domain resource switching includes a time required for changing the frequency domain resource and a radio resource control RRC reconfiguration time; and/or the frequency domain resource change time corresponding to the frequency domain resource retuning includes a time required for changing the frequency domain resource.

It can be learned that, in this implementation, the frequency domain resource change time corresponding to the frequency domain resource retuning is shorter than that corresponding to the frequency domain resource switching. For example, when a priority of data transmission currently performed by the terminal device is high, the frequency domain resource may be changed through frequency domain resource retuning, so that the frequency domain resource can be quickly changed, thereby reducing a switch delay.

According to a third aspect, a communication apparatus is provided. For beneficial effects, refer to the descriptions in the first aspect. Details are not described herein again. The communication apparatus has a function of implementing the behavior in the method example in the first aspect. The function may be implemented by hardware, or may be implemented by hardware executing corresponding software. The hardware or the software includes one or more modules corresponding to the foregoing function. In a possible design, the communication apparatus includes: a transceiver module, configured to receive first indication information, where the first indication information indicates the terminal device to determine a frequency domain resource in a first manner, the first manner includes one of frequency domain resource switching, frequency domain resource retuning, frequency hopping, a manner A, and/or a manner B, the manner A includes the frequency domain resource switching and the frequency hopping, and the manner B includes the frequency domain resource retuning and the frequency hopping; and a processing module, configured to communicate with a network device on the determined frequency domain resource. These modules may perform corresponding functions in the method example in the first aspect. For details, refer to the detailed descriptions in the method example. Details are not described herein again.

According to a fourth aspect, a communication apparatus is provided. For beneficial effects, refer to the descriptions in the second aspect. Details are not described herein again. The communication apparatus has a function of performing an action in the method example in the second aspect. The function may be implemented by hardware, or may be implemented by hardware executing corresponding software. The hardware or the software includes one or more modules corresponding to the foregoing function. In a possible design, the communication apparatus includes: a transceiver module, configured to send first indication information, where the first indication information indicates the terminal device to determine a frequency domain resource in a first manner, the first manner includes one of frequency domain resource switching, frequency domain resource retuning, frequency hopping, a manner A, and/or a manner B, the manner A includes the frequency domain resource switching and the frequency hopping, and the manner B includes the frequency domain resource retuning and the frequency hopping; and a processing module, configured to communicate with a terminal device on the frequency domain resource. These modules may perform corresponding functions in the method example in the second aspect. For details, refer to the detailed descriptions in the method example. Details are not described herein again.

According to a fifth aspect, a communication apparatus is provided. The communication apparatus may be the terminal device in the foregoing method embodiments or a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a sixth aspect, a communication apparatus is provided. The communication apparatus may be the network device in the foregoing method embodiments or a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a seventh aspect, a computer program product is provided. The computer program product includes computer program code. When the computer program code is run, the method performed by the terminal device in the foregoing aspects is performed.

According to an eighth aspect, a computer program product is provided. The computer program product includes computer program code. When the computer program code is run, the method performed by the network device in the foregoing aspects is performed.

According to a ninth aspect, this application provides a chip system. The chip system includes a processor, configured to implement the functions of the terminal device in the method in the foregoing aspects. In a possible design, the chip system further includes a memory, configured to store program instructions and/or data. The chip system may include a chip, or may include a chip and another discrete device.

According to a tenth aspect, this application provides a chip system. The chip system includes a processor, configured to implement the functions of the network device in the method in the foregoing aspects. In a possible design, the chip system further includes a memory, configured to store program instructions and/or data. The chip system may include a chip, or may include a chip and another discrete device.

According to an eleventh aspect, this application provides a computer-readable storage medium. The computer-readable storage medium stores a computer program. When the computer program is run, the method performed by the terminal device in the foregoing aspects is implemented.

According to a twelfth aspect, this application provides a computer-readable storage medium. The computer-readable storage medium stores a computer program. When the computer program is run, the method performed by the network device in the foregoing aspects is implemented.

### BRIEF DESCRIPTION OF DRAWINGS

FIG. 1 is a schematic diagram of a possible network architecture according to an embodiment of this application;
FIG. 2 is a schematic flowchart of a frequency domain resource change method according to an embodiment of this application;
FIG. 3 is a schematic diagram of frequency domain resource switching according to an embodiment of this application;
FIG. 4 is a schematic diagram of frequency domain resource retuning according to an embodiment of this application;
FIG. 5 is a schematic diagram of frequency hopping according to an embodiment of this application;
FIG. 6 is a schematic diagram of a first change manner according to an embodiment of this application;
FIG. 7 is a schematic diagram of a second change manner according to an embodiment of this application;
FIG. 8 is a schematic diagram of a communication apparatus according to an embodiment of this application; and
FIG. 9 is a schematic diagram of another communication apparatus according to an embodiment of this application.

### DESCRIPTION OF EMBODIMENTS

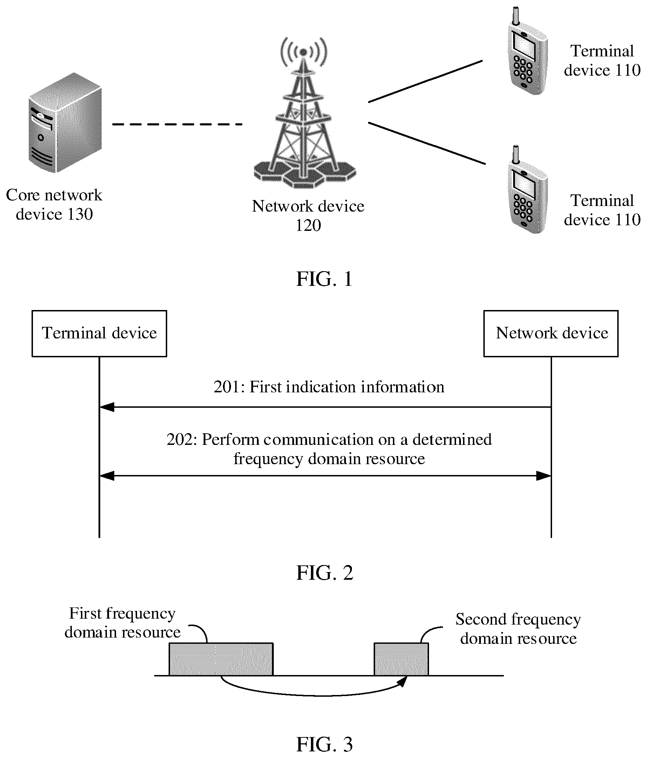

FIG. 1 is a schematic diagram of a possible network architecture to which an embodiment of this application is applicable. The network architecture includes a terminal device 110 and a network device 120. The terminal device 110 and the network device 120 may communicate with each other through a Uu air interface. The Uu air interface may be understood as a universal interface between a terminal device and a network device (universal UE to network interface). Transmission on the Uu air interface includes uplink transmission and downlink transmission.

For example, the uplink transmission means that the terminal device 110 sends uplink information to the network device 120. The uplink information may include one or more of uplink data information, uplink control information, and a reference signal (reference signal, RS). A channel used to transmit the uplink information is referred to as an uplink channel, and the uplink channel may be a physical uplink shared channel (physical uplink shared channel, PUSCH) or a physical uplink control channel (physical uplink control channel, PUCCH). The PUSCH is used to carry uplink data, and the uplink data may also be referred to as uplink data information. The PUCCH is used to carry uplink control information (uplink control information, UCI) fed back by the terminal device. The UCI may include channel state information (channel state information, CSI), an acknowledgement (acknowledgement, ACK)/negative acknowledgement (negative acknowledgement, NACK), or the like.

For example, the downlink transmission means that the network device 120 sends downlink information to the terminal device 110. The downlink information may include one or more of downlink data information, downlink control information, and a downlink reference signal. The downlink reference signal may be a channel state information reference signal (channel state information reference signal, CSI-RS) or a phase tracking reference signal (phase tracking reference signal, PTRS). A channel used to transmit the downlink information is referred to as a downlink channel, and the downlink channel may be a physical downlink shared channel (physical downlink shared channel, PDSCH) or a physical downlink control channel (physical downlink control channel, PDCCH). The PDCCH is used to carry downlink control information (downlink control information, DCI). The PDSCH is used to carry downlink data, and the downlink data may also be referred to as downlink data information.

Optionally, the network architecture shown in FIG. 1 may further include a core network device 130. The terminal device 110 may be connected to the network device 120 in a wireless manner, and the network device 120 may be connected to the core network device 130 in a wired or wireless manner. The core network device 130 and the network device 120 may be different independent physical devices; or the core network device 130 and the network device 120 may be a same physical device, and all or some of logical functions of the core network device 130 and the network device 120 are integrated in the physical device.

It should be noted that, in the network architecture shown in FIG. 1, the terminal device 110 may be at a fixed location, or may be movable. This is not limited. The network architecture shown in FIG. 1 may further include other network devices, for example, a wireless relay device and a wireless backhaul device. This is not limited. In the architecture shown in FIG. 1, quantities of terminal devices, network devices, and core network devices are not limited.

Technical solutions in embodiments of this application may be applied to various communication systems, for example, a long term evolution (long term evolution, LTE) system, a fifth generation (5th generation, 5G) mobile communication system, and a future mobile communication system.

The network device 120 included in this embodiment of this application may be an access network (Access network, AN) device. The access network device may be a device, on an access network, that communicates with wireless user equipment on an air interface by using one or more cells, for example, a base station NodeB (for example, an access point). The NodeB may be configured to perform mutual conversion between a received air frame and an internet protocol (IP) packet, and serves as a router between the terminal device and a remaining part of the access network. The remaining part of the access network may include an IP network. For example, the NodeB may be an evolved NodeB (NodeB, eNB, or e-NodeB, evolutional NodeB) in a long term evolution (long term evolution, LTE) system or a long term evolution-advanced (long term evolution-advanced, LTE-A) system; or may include a new radio network device gNB in a fifth generation (the 5th generation, 5G) mobile communication technology NR system. Alternatively, the access network device may be a network device in a vehicle-to-everything (Vehicle to Everything, V2X) technology: a road side unit (road side unit, RSU). The RSU may be a fixed infrastructure entity supporting a V2X application, and may exchange a message with another entity supporting the V2X application. In addition, the access network device may alternatively include a centralized unit (centralized unit, CU) and a distributed unit (distributed unit, DU) in a cloud radio access network (cloud radio access network, CloudRAN) system. In this case, the access network device coordinates air interface attribute management. The access network device is not limited in this embodiment of this application.

The terminal device 110 included in this embodiment of this application is a wearable device that has low device complexity and that is used for industrial wireless sensing and video surveillance, that is, REDCAP UE. Compared with a conventional terminal device, the REDCAP UE may have the following features: a reduced quantity of transceiver antennas, reduced UE bandwidth, half-duplex frequency division duplex FDD, a relaxed UE processing timeline, and a reduced UE processing capability. In addition, the REDCAP UE may be alternatively sub-classified into a plurality of sub-types. For example, the REDCAP UE may be sub-classified into an industrial wireless sensor (Industrial Wireless Sensors, IWSN), a video monitor, a wearable device, and the like based on application scenarios. Certainly, the REDCAP UE may be alternatively sub-classified into a plurality of sub-types based on criteria such as bandwidth, a modulation order, and a peak rate of the REDCAP UE. A sub-type division manner is not limited in this application. For example, the REDCAP UE may be alternatively sub-classified into a plurality of types based on capabilities and factors such as bandwidth of the REDCAP UE.

For ease of understanding this application, related technical knowledge included in embodiments of this application is described herein first.

In an NR standard design, a new technology is introduced: receiver-bandwidth adaptation (receiver-bandwidth adaptation). By using the receiver-bandwidth adaptation technology, a terminal device listens to a downlink control channel only on low bandwidth and receives a small amount of downlink data transmission. When the terminal device is to receive a large amount of data or serious interference occurs on current bandwidth, bandwidth switching, namely, BWP switching, needs to be performed.

To implement BWP switching, a base station needs to configure a plurality of BWPs for the terminal device in advance. The plurality of BWPs are indicated by BWP indication information, and a quantity of bits in an indication field corresponding to the BWP indication information is determined by a quantity of BWPs configured by the base station for the terminal device. For example, if the quantity of BWPs configured by the base station for the terminal device is 4, a size of the indication field corresponding to the BWP indication information is 2 bits. When the terminal device needs to perform BWP switching, the base station sends downlink control information (Downlink control information, DCI) to the terminal device. The DCI includes an index (index) of a target BWP, and the DCI indicates the terminal device to switch from a currently used BWP to the target BWP corresponding to the index, to communicate with the base station by using the target BWP.

However, in a BWP switching process, if the terminal device is performing data transmission, the data transmission needs to be interrupted first, and after BWP switching is completed, data transmission is performed again by using the target BWP. That is, a specific BWP switch delay occurs in the BWP switching process. In addition, the BWP switch delay varies with different terminal device capabilities or subcarrier spacings (sub-carrier space, SCS). Table 1 describes correspondences between a BWP switch delay and a terminal device capability and between a BWP switch delay and a subcarrier spacing.

**Table 1**

| *µ* | NR slot (slot) length (ms) | BWP switch delay (TBWPswitchDelay) (slots) | |
|---|---|---|---|
| | | Type₁^{Note 1} | Type₂^{Note 1} |
| 0 | 1 | 1 | 3 |
| 1 | 0.5 | 2 | 5 |
| 2 | 0.25 | 3 | 9 |
| 3 | 0.125 | 6 | 18 |
| Note 1 (Note 1): Depend on a terminal device capability (Depends on UE capability). | | | |
| Note 2 (Note 2): If BWP switching includes an SCS change, the BWP switch delay is determined by a smaller one of an SCS before the BWP switching and an SCS after the BWP switching (If the BWP switch involves changing of SCS, the BWP switch delay is determined by the smaller SCS between the SCS before BWP switch and the SCS after BWP switch). | | | |

It can be learned from Table 1 that a value range of the BWP switch delay is 0.75 ms to 3 ms, and the time is much longer than a frequency domain retuning (retuning) time, mainly because an RRC reconfiguration process further needs to be performed in a BWP switching process. Therefore, the BWP switch delay further includes an RRC reconfiguration time.

Bandwidth supported by REDCAP UE is limited. Therefore, transmission may be possibly performed only within a bandwidth range of 20 MHz, 10 MHz, or 5 MHz. If serious interference occurs on a frequency domain resource on which data is currently being transmitted (for example, neighboring cell interference occurs) or resources are insufficient (many REDCAP UEs receive services on the frequency domain resource), the frequency domain resource of the REDCAP UE needs to be switched. If the base station also switches the frequency domain resource of the REDCAP UE by using a BWP switching technology, a long switch delay occurs, affecting a communication process of the REDCAP UE, and resulting in low communication efficiency of the REDCAP UE.

Therefore, to reduce a switch delay in a frequency domain resource switching process of the REDCAP UE and improve communication efficiency of the REDCAP UE, technical solutions of this application are specially proposed.

First, it should be noted that a frequency domain resource mentioned in embodiments of this application includes at least one of the following: a BWP, a carrier, a subcarrier, and a subband. In this application, a frequency domain resource change process is described in detail mainly by using an example in which the frequency domain resource is a BWP. A change process of another frequency domain resource is similar to the BWP change process, and details are not described again. Therefore, a frequency domain resource mentioned later may also be referred to as a BWP.

The following describes an implementation process of a resource determining method in this application with reference to the network architecture shown in FIG. 1.

In the present invention, duration required for frequency resource retuning is different from duration required for frequency resource switching. For example, the duration may be a guard period (guard period), a guard interval, a maximum guard period, a maximum guard interval, a minimum guard period, or a minimum guard interval. For example, the duration required for frequency resource retuning is shorter than the duration required for frequency resource switching.

The network device 120 sends first indication information to the terminal device 110, where the first indication information is used to indicate the terminal device to determine a frequency domain resource in a first manner, the first manner includes one of frequency domain resource switching, frequency domain resource retuning, frequency hopping, a manner A, and/or a manner B, the manner A includes the frequency domain resource switching and the frequency hopping, and the manner B includes the frequency domain resource retuning and the frequency hopping. The terminal device 110 communicates with the network device on the determined frequency domain resource.

For example, the frequency domain resource switching may be BWP switching. To perform BWP switching, a frequency domain resource needs to be changed first, and then RRC reconfiguration is performed. Therefore, a frequency domain resource change time corresponding to the frequency domain resource switching includes a time required for changing the frequency domain resource, namely, a frequency domain retuning time and an RRC reconfiguration time.

For example, the frequency domain resource retuning means retuning a frequency domain resource, for example, retuning from a first frequency domain resource to a second frequency domain resource. Without RRC reconfiguration, the terminal device 110 transmits data by using a link parameter corresponding to the first frequency domain resource. Therefore, a frequency domain resource change time corresponding to the frequency domain resource retuning includes only a frequency domain retuning time, and the frequency domain resource change time corresponding to the frequency domain resource retuning is shorter than the frequency domain resource change time corresponding to the frequency domain resource switching.

It can be learned that, in this embodiment of this application, the network device 120 indicates, by using the first indication information, the terminal device to determine the frequency domain resource in the first manner, so that the terminal device 110 determines the frequency domain resource in a manner adapting to a current frequency domain resource change, instead of performing frequency domain resource switching simply through BWP switching. In this way, the terminal device 110 can quickly change a frequency domain resource based on a current transmission requirement, thereby reducing a delay for changing the frequency domain resource, and improving communication efficiency. For example, when the terminal device has an urgent transmission requirement, the network device may indicate the terminal device to change the frequency domain resource through frequency domain resource retuning. Therefore, the terminal device can quickly complete the frequency domain resource change, thereby reducing a switch delay, meeting a transmission requirement, and improving communication efficiency.

FIG. 2 is a schematic flowchart of a resource determining method according to an embodiment of this application. The method includes but is not limited to the following steps.

201: A network device sends first indication information to a terminal device. Correspondingly, the terminal device receives the first indication information.

The first message indicates the terminal device to determine a frequency domain resource in a first manner. The first manner includes one of frequency domain resource switching, frequency domain resource retuning, frequency hopping, a manner A, and/or a manner B. The manner A includes the frequency domain resource switching and the frequency hopping. The manner B includes the frequency domain resource retuning and the frequency hopping.

For example, after frequency domain resource retuning is completed, without RRC reconfiguration, the terminal device can communicate with the network device on a retuned frequency domain resource by using a link parameter corresponding to a frequency domain resource before retuning. Therefore, a frequency domain resource change time corresponding to the frequency domain resource retuning includes only a frequency domain retuning time corresponding to the terminal device. The frequency domain retuning time is related to a type of the terminal device. For example, the frequency domain retuning time may be two symbols, that is, 140 µs.

The first indication information may be an existing signaling message or a new signaling message. This is not limited in this application. For example, the first indication information may be DCI.

For example, the network device may indicate the first manner by using a new field in the DCI, or may indicate the first manner by using an existing field in the DCI. This is not limited in this application.

For example, when the first manner is indicated by a new field in the DCI, three new bits in the DCI may be used to indicate the terminal device to determine the frequency domain resource in the first manner. For example, 001 is used to indicate that the first manner is the frequency domain resource switching, 010 is used to indicate that the first manner is the frequency domain resource retuning, 011 is used to indicate that the first manner is the frequency hopping, 100 is used to indicate that the first manner is the manner A, and 101 is used to indicate that the first manner is the manner B. In addition, 000, 110, and 111 are reserved, so that 000, 110, and 111 may be used for indication when there is subsequently a new frequency domain resource change manner.

For example, when the first manner is indicated by an existing field in the DCI, the first manner may be indicated by first duration included in the DCI. For example, the first duration may be a time required for the terminal device to change a frequency domain resource. Specifically, when the first duration is greater than a first threshold, it is determined that the first manner is the frequency domain resource switching; or when the first duration is less than the first threshold, it is determined that the first manner is the frequency domain resource retuning. That is, the network device may indicate, by using the first duration in the DCI, the terminal device to determine the frequency domain resource in the first manner. For example, the first duration may be implemented by a timer, or may be duration specified in a protocol. In this manner, no new field needs to be added to the DCI, thereby reducing signaling overheads.

For example, the first threshold may include one of the following: a frequency domain resource change time corresponding to the frequency domain resource switching, namely, a BWP switch delay corresponding to the terminal device; or a fixed value specified in a protocol, to be specific, a value jointly used by all REDCAP UEs; or a value indicated by the network device in advance by using signaling, for example, a value indicated in advance by using an RRCI message. That is, before the first indication information is sent to the terminal device, an RRC message is sent to the terminal device, where the RRC message includes the first threshold. Therefore, the first threshold required for determining the resource may be dynamically adjusted by using the RRC message, thereby improving flexibility for determining the frequency domain resource.

For example, the first indication information is further used to indicate a parameter of the frequency domain resource. The parameter of the frequency domain resource is related to a specific type of the first manner.

For ease of description, a frequency domain resource not determined in the first manner may be referred to as a first frequency domain resource, and the frequency domain resource determined in the first manner may be referred to as a second frequency domain resource. For better understanding of technical solutions of this application, solutions of this application are described below by using the first frequency domain resource and the second frequency domain resource as examples.

For example, when the first manner is the frequency domain resource switching, the parameter of the frequency domain resource is an index (index) of the frequency domain resource. The terminal device determines the second frequency domain resource based on the index.

As shown in FIG. 3, after the frequency domain resource is determined, RRC reconfiguration is performed, and the second frequency domain resource is used for communicating with the network device. In addition, the first frequency domain resource mentioned in this application is a frequency domain resource currently used by the terminal device. That is, the terminal device receives, by using the first frequency domain resource, the first indication information sent by the network device.

For example, when the change manner is the frequency domain resource retuning, the parameter of the frequency domain resource is location indication information of the second frequency domain resource. The location indication information is used to indicate the terminal device to determine the frequency domain resource in the first manner.

In some possible implementations, the location indication information of the second frequency domain resource may be a retuning ratio. For example, the retuning ratio is indicated by the first indication information. The terminal device determines retuning bandwidth based on the retuning ratio and a retuning granularity, and determines the second frequency domain resource based on the retuning bandwidth, where the retuning bandwidth is equal to |the retuning ratio| × the retuning granularity.

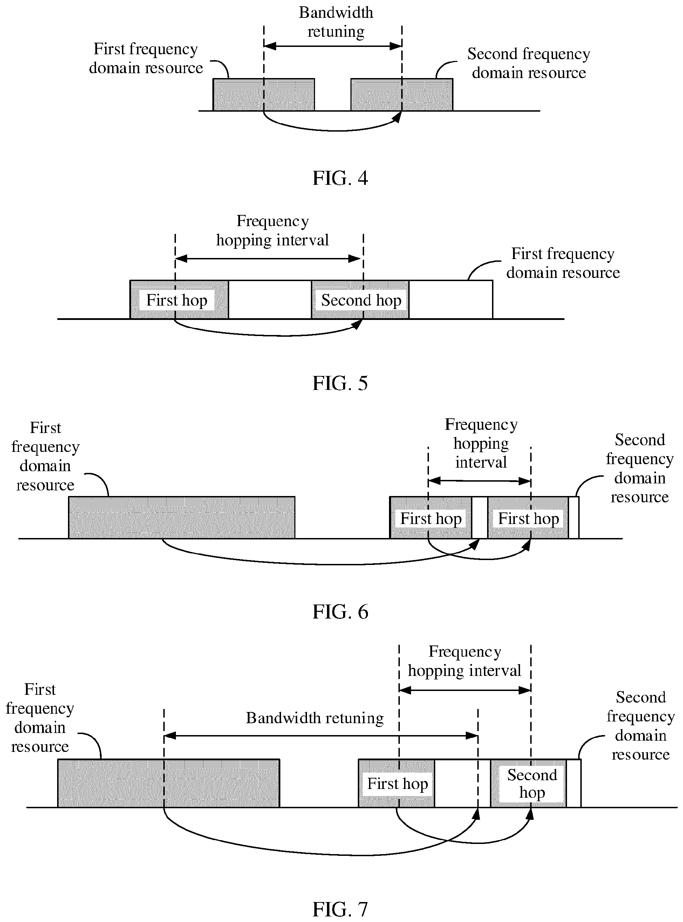

As shown in FIG. 4, the terminal device determines the second frequency domain resource in the first manner, where an absolute difference between start frequencies (or cut-off frequencies) of the second frequency domain resource and the first frequency domain resource is the retuning bandwidth, and after the frequency domain resource retuning is completed, the terminal device communicates with the network device by using the second frequency domain resource. Therefore, the terminal device may change a frequency domain resource only by retuning the frequency domain resource, without RRC reconfiguration. Therefore, a frequency domain resource change time is only a time required for a retuning process, thereby reducing a switch delay in a frequency domain resource change process, and improving communication efficiency.

It should be noted that, in a frequency domain resource retuning process, FIG. 4 shows frequency domain resource retuning only in a direction in which a frequency increases. In actual application, retuning may be alternatively performed in a direction in which a frequency decreases. A specific retuning direction may be determined by a value of the retuning ratio. For example, when the retuning ratio is a positive value, it is determined that retuning is to be performed in a direction in which a frequency increases; or when the retuning ratio is a negative value, it is determined that retuning is to be performed in a direction in which a frequency decreases. In addition, the retuning direction may be alternatively indicated by one or more bits in the indication information. For example, when one bit is used for indication, if the bit is 1, it is determined that retuning is to be performed in a direction in which a frequency increases; or if the bit is 0, it is determined that retuning is to be performed in a direction in which a frequency decreases. A manner of determining the retuning direction is not limited in this application.

Table 2 shows a correspondence between the first indication information and the retuning ratio.

**Table 2**

| | | | | | | | | |
|---|---|---|---|---|---|---|---|---|
| First indication information | 000 | 001 | 010 | 011 | 100 | 101 | 110 | 111 |
| Retuning ratio | 1/8 | 1/4 | 3/8 | 1/2 | 5/8 | 3/4 | 7/8 | Reserved |

In addition, the retuning granularity may be one of the following: carrier bandwidth, maximum bandwidth supported by the terminal device, bandwidth of the first frequency domain resource, a fixed value, a ratio of the carrier bandwidth to the bandwidth of the first frequency domain resource, or a value indicated by the network device by using signaling.

Specifically, the network device may notify, in advance, the terminal device of a specific retuning granularity to be used by the terminal device. For example, the network device may notify the terminal device by using an RRC message. For example, the retuning granularity indicated by the RRC message is the carrier bandwidth, and the terminal device may determine the retuning bandwidth based on the carrier bandwidth and the retuning ratio. Certainly, the terminal device may alternatively indicate the retuning granularity by using one or more bits in the indication information, that is, simultaneously indicate the retuning granularity and the retuning bandwidth. For example, the bits 001 are used to indicate that the retuning granularity is the carrier bandwidth, or the bits 010 are used to indicate that the retuning granularity is the maximum bandwidth supported by the terminal device. Therefore, a manner of indicating the retuning granularity is not limited in this application.

For example, when the first manner is the frequency hopping, the parameter is a frequency hopping interval. Further, the first indication information is further used to indicate a location of a first hop. Therefore, the terminal device determines the second frequency domain resource based on the frequency hopping interval and the location of the first hop, that is, determines a location of a second hop.

Therefore, as shown in FIG. 5, after determining the location of the second hop, the terminal device may perform frequency hopping on the first frequency domain resource based on the location of the first hop and the location of the second hop. To be specific, when a frequency hopping moment arrives, the terminal device performs frequency hopping from the location of the first hop to the location of the second hop, and communicates with the network device by using the second frequency domain resource corresponding to the second hop; and when a next frequency hopping moment arrives, the terminal device performs frequency hopping from the second frequency domain resource to the first frequency domain resource, and communicates with the network device by using the first frequency domain resource corresponding to the first hop. In addition, when the first manner is the frequency hopping, the first frequency domain resource corresponding to the first hop is essentially a first resource block (Resource Block, RB) corresponding to the first hop in a frequency domain resource currently used by the terminal device, and the second frequency domain resource corresponding to the second hop is essentially a second RB corresponding to the second hop in the first frequency domain resource. Therefore, performing frequency hopping on the first frequency domain resource is essentially performing frequency hopping between the first RB and the second RB in the currently used first frequency domain resource.

For example, when the first manner is the manner A, the parameter is an index of the second frequency domain resource and a frequency hopping interval. Therefore, the first indication information indicates the terminal device to determine the second frequency domain resource based on the index, and perform frequency hopping on the second frequency domain resource based on the frequency hopping interval.

As shown in FIG. 6, the terminal device may first perform frequency domain resource switching based on the index, to switch a frequency domain resource from the first frequency domain resource to the second frequency domain resource, where a switching process is similar to the foregoing frequency domain resource switching process, and is not described again; and then perform frequency hopping and transmission on the frequency domain resource based on the frequency hopping interval.

Specifically, the first indication information further indicates a location of a first hop in the frequency domain resource, and the terminal device determines a location of a second hop based on the location of the first hop and the frequency hopping interval. Then the terminal device first communicates with the network device by using a frequency domain resource (RB) corresponding to the first hop in the frequency domain resource, and when a frequency hopping moment arrives, performs frequency hopping from the location of the first hop to the location of the second hop, and transmits data by using a frequency domain resource (RB) corresponding to the second hop, to implement frequency hopping and transmission on the frequency domain resource. After the frequency domain resource is changed to the second frequency domain resource, even if interference occurs on the second frequency domain resource, for example, a neighboring cell causes interference to the second frequency domain resource when switching to the second frequency domain resource is performed, because the terminal device may transmit data at different moments by using RBs on different frequency bands in the second frequency domain resource during frequency hopping and transmission on the second frequency domain resource, a communication process is not affected, and communication efficiency is further improved.

For example, when the change manner is the manner B, the parameter is location indication information of the second frequency domain resource and a frequency hopping interval. Therefore, the location indication information of the second frequency domain resource indicates the terminal device to determine the frequency domain resource in the first manner, and perform frequency hopping on the frequency domain resource based on the frequency hopping interval.

As shown in FIG. 7, the terminal device first retunes a frequency domain resource from the first frequency domain resource to the second frequency domain resource based on the location indication information of the second frequency domain resource, where a retuning process is similar to the foregoing retuning process, and is not described again; and then performs frequency hopping and transmission on the second frequency domain resource based on the frequency hopping interval. Specifically, the first indication information further includes a location of a first hop in the frequency domain resource, and the terminal device may determine a location of a second hop based on the location of the first hop and the frequency hopping interval. Then the terminal device first communicates with the network device by using a frequency domain resource (RB) corresponding to the first hop in the second frequency domain resource, and when a frequency hopping moment arrives, performs frequency hopping from the location of the first hop to the location of the second hop, and communicates with the network device by using a frequency domain resource (RB) corresponding to the second hop, to implement frequency hopping on the second frequency domain resource. Therefore, after the frequency domain resource is changed to the second frequency domain resource, interference may occur on the second frequency domain resource. For example, the second frequency domain resource is obtained through retuning, there may be an overlapping RB between the second frequency domain resource and the first frequency domain resource, and the overlapping RB may be an RB in which interference occurs. If the terminal device transmits data by using the overlapping RB, a communication process is affected. However, because frequency hopping is performed on the second frequency domain resource, the terminal device may transmit data at different moments by using RBs on different frequency bands in the second frequency domain resource, so that data transmission of the terminal device is not affected, and communication efficiency is further improved.

202: The terminal device communicates with the network device on the determined frequency domain resource, and the network device communicates with the terminal device on the frequency domain resource.

After the terminal device changes a communication resource to the frequency domain resource, the terminal device may communicate with the network device by using the frequency domain resource.

In this embodiment provided in this application, the method provided in this embodiment of this application is described separately from perspectives of the network device, the terminal device, and interaction between the network device and the terminal device. To implement the functions in the method provided in this embodiment of this application, the network device and the terminal device each may include a hardware structure and/or a software module, to implement the foregoing functions in a form of a hardware structure, a software module, or a combination of a hardware structure and a software module. Whether one of the foregoing functions is performed in the manner of a hardware structure, a software module, or a hardware structure and a software module depends on a specific application and design constraints of the technical solutions.

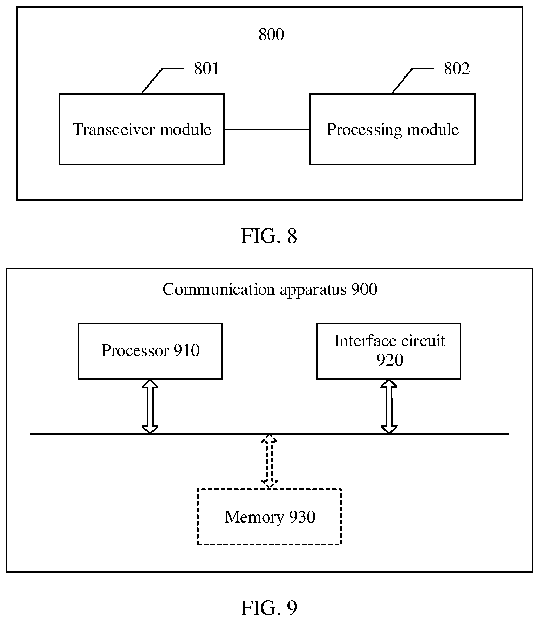

FIG. 8 and FIG. 9 are schematic diagrams of possible structures of a communication apparatus according to an embodiment of this application. The communication apparatus may implement the functions of the terminal device or the network device in the foregoing method embodiment, and therefore can also achieve the beneficial effects of the foregoing method embodiment. In this embodiment of this application, the communication apparatus may be the terminal device 110 shown in FIG. 1, the network device 120 shown in FIG. 1, or a module (for example, a chip) applied to a terminal device or a network device.

As shown in FIG. 8, the communication apparatus 800 includes a transceiver module 801 and a processing module 802. The communication apparatus 800 may be configured to implement the functions of the terminal device or the network device in the method embodiment shown in FIG. 1.

When the communication apparatus 800 is configured to implement the functions of the terminal device in the method embodiment shown in FIG. 1, the transceiver module 801 is configured to receive indication information of a frequency domain resource change manner; the processing module 802 is configured to determine a target uplink configuration grant associated with a first time-frequency resource, where the target uplink configuration grant is one of the N uplink configuration grants; and the processing module 802 is configured to determine the frequency domain resource change manner based on the indication information, where the change manner includes one of frequency domain resource switching, frequency domain resource retuning, frequency hopping, a first change manner, or a second change manner, the first change manner includes the frequency domain resource switching and the frequency hopping, and the second change manner includes the frequency domain resource retuning and the frequency hopping.

When the communication apparatus 800 is configured to implement the functions of the network device in the method embodiment shown in FIG. 1, the transceiver module 801 is configured to send indication information of a frequency domain resource change manner, where the change manner includes one of frequency domain resource switching, frequency domain resource retuning, frequency hopping, a first change manner, or a second change manner, the first change manner includes the frequency domain resource switching and the frequency hopping, and the second change manner includes the frequency domain resource retuning and the frequency hopping; and the processing module 802 is configured to perform data transmission with a terminal device by using a second frequency domain resource, where the second frequency domain resource is a frequency domain resource determined in a frequency domain resource change manner indicated by the indication information.

For more detailed descriptions of the transceiver module 801 and the processing module 802, refer to related descriptions in the foregoing method embodiment. Details are not described herein again.

As shown in FIG. 9, the communication apparatus 900 includes a processor 910 and an interface circuit 920. The processor 910 and the interface circuit 920 are coupled to each other. It can be understood that the interface circuit 920 may be a transceiver or an input/output interface. Optionally, the communication apparatus 900 may further include a memory 930, configured to store instructions executed by the processor 910, or store input data required for the processor 910 to run instructions, or store data generated after the processor 910 runs instructions.

When the communication apparatus 900 is configured to implement the method in the foregoing method embodiment, the processor 910 is configured to perform the functions of the processing module 802, and the interface circuit 920 is configured to perform the functions of the transceiver module 801.

When the communication apparatus is a chip applied to a terminal device, the chip of the terminal device implements the functions of the terminal device in the foregoing method embodiment. The chip of the terminal device receives information from another module (for example, a radio frequency module or an antenna) in the terminal device, where the information is sent by a network device to the terminal device; or the chip of the terminal device sends information to another module (for example, a radio frequency module or an antenna) in the terminal device, where the information is sent by the terminal device to a network device.

When the communication apparatus is a chip applied to a network device, the chip of the network device implements the functions of the network device in the foregoing method embodiment. The chip of the network device receives information from another module (for example, a radio frequency module or an antenna) in the network device, where the information is sent by a terminal device to the network device; or the chip of the network device sends information to another module (for example, a radio frequency module or an antenna) in the network device, where the information is sent by the network device to a terminal device.

It should be understood that the processor in embodiments of this application may be a central processing unit (central processing unit, CPU); or may be another general-purpose processor, a digital signal processor (digital signal processing, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor, any regular processor, or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in a network device as discrete components.

All or some of the foregoing embodiments may be implemented by using software, hardware, firmware, or any combination thereof. When software is used to implement the embodiments, all or a part of embodiments may be implemented in a form of a computer program product. The computer program product includes one or more computer programs or instructions. When the computer program programs or instructions are loaded and executed on the computer, the procedure or functions according to embodiments of this application are all or partially generated. The computer may be a general-purpose computer, a dedicated computer, a computer network, or another programmable apparatus. The computer programs or instructions may be stored in a computer-readable storage medium or may be transmitted by using the computer-readable storage medium. The computer-readable storage medium may be any usable medium accessible to a computer, or a data storage device integrating one or more usable media, for example, a server. The usable medium may be a magnetic medium, for example, a floppy disk, a hard disk, or a magnetic tape; or may be an optical medium, for example, a DVD; or may be a semiconductor medium, for example, a solid-state disk (solid-state disk, SSD).

In embodiments of this application, unless there is a particular description or a logical conflict, terms and/or descriptions in different embodiments are consistent and may be mutually referenced. Technical features in different embodiments may be combined based on their internal logical relationship to form a new embodiment.

In this application, "at least one" means one or more, "a plurality of" means two or more, and "and/or" describes an association relationship between associated objects and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. In formulas of this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean execution sequences, and execution sequences of the processes should be determined based on functions and internal logic of the processes.

## Claims

1. A resource determining method, comprising:
receiving (201), on a first frequency domain resource, first indication information, wherein the first indication information indicates a terminal device to determine a second frequency domain resource in a first manner, the second frequency domain resource is the frequency domain resource determined in the first manner, the first manner comprises one of frequency domain resource switching, frequency domain resource retuning, frequency hopping, a manner A, and/or a manner B, the manner A comprises the frequency domain resource switching and the frequency hopping, and the manner B comprises the frequency domain resource retuning and the frequency hopping; and
communicating (202) with a network device on the determined second frequency domain resource;
wherein the first indication information is used to indicate a parameter of the second frequency domain resource, and that the first indication information indicates a terminal device to determine a second frequency domain resource in a first manner comprises:
the parameter of the second frequency domain resource indicates the terminal device to determine the second frequency domain resource in the first manner;
wherein
the parameter of the second frequency domain resource is an index of the second frequency domain resource;
the parameter of the second frequency domain resource is location indication information of the second frequency domain resource;
the parameter of the second frequency domain resource is a frequency hopping interval:
the parameter of the second frequency domain resource is an index of the second frequency domain resource and a frequency hopping interval, wherein the frequency hopping interval is used to indicate to perform frequency hopping within the second frequency domain resource; or
the parameter of the second frequency domain resource is location indication information of the second frequency domain resource and a frequency hopping interval, wherein the frequency hopping interval is used to indicate to perform frequency hopping within the second frequency domain resource.

2. The method according to claim 1, wherein the first indication information is downlink control information, DCI.

3. The method according to claim 1 or 2, wherein the first indication information indicates a terminal device to determine a second frequency domain resource in a first manner comprises:
the first indication information is used to indicate first duration, and the terminal device is indicated, based on the first duration and a first threshold, to determine the second frequency domain resource in the first manner.

4. The method according to any one of claims 1 to 3, wherein the second frequency domain resource comprises at least one of the following: a bandwidth part, BWP, a carrier, a subcarrier, or a subband.

5. The method according to any one of claims 1 to 4, wherein
a frequency domain resource change time corresponding to the frequency domain resource switching comprises a time required for changing the frequency domain resource and a radio resource control, RRC, reconfiguration time; and/or
a frequency domain resource change time corresponding to the frequency domain resource retuning comprises a time required for changing the frequency domain resource.

6. A resource determining method, comprising:
sending (201), on a first frequency domain resource, first indication information, wherein the first indication information indicates a terminal device to determine a second frequency domain resource in a first manner, the second frequency domain resource is the frequency domain resource determined in the first manner, the first manner comprises one of frequency domain resource switching, frequency domain resource retuning, frequency hopping, a manner A, and/or a manner B, the manner A comprises the frequency domain resource switching and the frequency hopping, and the manner B comprises the frequency domain resource retuning and the frequency hopping; and
communicating (202) with the terminal device on the second frequency domain resource;
wherein the first indication information is used to indicate a parameter of the second frequency domain resource, and that
the first indication information indicates a terminal device to determine a second frequency domain resource in a first manner comprises:
the parameter of the second frequency domain resource indicates the terminal device to determine the second frequency domain resource in the first manner;
wherein
the parameter of the second frequency domain resource is an index of the second frequency domain resource;
the parameter of the second frequency domain resource is location indication information of the second frequency domain resource;
the parameter of the second frequency domain resource is a frequency hopping interval:
the parameter of the second frequency domain resource is an index of the second frequency domain resource and a frequency hopping interval, wherein the frequency hopping interval is used to indicate to perform frequency hopping within the second frequency domain resource; or
the parameter of the second frequency domain resource is location indication information of the second frequency domain resource and a frequency hopping interval, wherein the frequency hopping interval is used to indicate to perform frequency hopping within the second frequency domain resource.

7. The method according to claim 6, wherein the first indication information is downlink control information, DCI.

8. The method according to claim 6 or 7, wherein the first indication information indicates a terminal device to determine a second frequency domain resource in a first manner comprises:
the first indication information is used to indicate first duration, and the terminal device is indicated, based on the first duration and a first threshold, to determine the second frequency domain resource in the first manner.

9. The method according to any one of claims 6 to 8, wherein the second frequency domain resource comprises at least one of the following: a bandwidth part, BWP, a carrier, a subcarrier, or a subband.

10. The method according to any one of claims 6 to 9, wherein
a frequency domain resource change time corresponding to the frequency domain resource switching comprises a time required for changing the frequency domain resource and a radio resource control RRC reconfiguration time; and/or
a frequency domain resource change time corresponding to the frequency domain resource retuning comprises a time required for changing the frequency domain resource.

11. A communication apparatus, comprising modules configured to perform the method according to any one of claims 1 to 5 or claims 6 to 10.

## Patentansprüche

1. Ressourcenbestimmungsverfahren, umfassend:
Empfangen (201), über eine erste Frequenzbereichsressource, von ersten Anzeigeinformationen, wobei die ersten Anzeigeinformationen einer Endgerätvorrichtung anzeigen, eine zweite Frequenzbereichsressource auf eine erste Weise zu bestimmen, die zweite Frequenzbereichsressource die Frequenzbereichsressource ist, die auf die erste Weise bestimmt wird, die erste Weise eines von Frequenzbereichsressourcenumschaltung, Frequenzbereichsressourcen-Neuabstimmung, Frequenzsprung, eine Weise A und/oder eine Weise B umfasst, die Weise A die Frequenzbereichsressourcenumschaltung und den Frequenzsprung umfasst und die Weise B die Frequenzbereichsressourcen-Neuabstimmung und den Frequenzsprung umfasst; und
Kommunizieren (202) mit einer Netzvorrichtung über die bestimmte zweite Frequenzbereichsressource;
wobei die ersten Anzeigeinformationen verwendet werden, um einen Parameter der zweiten Frequenzbereichsressource anzuzeigen, und wobei die ersten Anzeigeinformationen einer Endgerätvorrichtung anzeigen, eine zweite Frequenzbereichsressource auf eine erste Weise zu bestimmen, was Folgendes umfasst:
der Parameter der zweiten Frequenzbereichsressource zeigt der Endgerätvorrichtung an, die zweite Frequenzbereichsressource auf die erste Weise zu bestimmen;
wobei der Parameter der zweiten Frequenzbereichsressource ein Index der zweiten Frequenzbereichsressource ist;
der Parameter der zweiten Frequenzbereichsressource aus Ortsanzeigeinformationen der zweiten Frequenzbereichsressource besteht;
der Parameter der zweiten Frequenzbereichsressource ein Frequenzsprungintervall ist;
der Parameter der zweiten Frequenzbereichsressource ein Index der zweiten Frequenzbereichsressource und ein Frequenzsprungintervall ist, wobei das Frequenzsprungintervall verwendet wird, um anzuzeigen, einen Frequenzsprung innerhalb der zweiten Frequenzbereichsressource durchzuführen; oder
der Parameter der zweiten Frequenzbereichsressource aus Ortsanzeigeinformationen der zweiten Frequenzbereichsressource und einem Frequenzsprungintervall besteht, wobei das Frequenzsprungintervall verwendet wird, um anzuzeigen, einen Frequenzsprung innerhalb der zweiten Frequenzbereichsressource durchzuführen.

2. Verfahren gemäß Anspruch 1, wobei die ersten Anzeigeinformationen Abwärtsstrecken-Steuerungsinformationen, DCI ("Downlink Control Information"), sind.

3. Verfahren gemäß Anspruch 1 oder 2, wobei die ersten Anzeigeinformationen einer Endgerätvorrichtung anzeigen, eine zweite Frequenzbereichsressource auf eine erste Weise zu bestimmen, was Folgendes umfasst:
die ersten Anzeigeinformationen werden verwendet, um eine erste Dauer anzuzeigen, und der Endgerätvorrichtung wird basierend auf der ersten Dauer und einem ersten Schwellenwert angezeigt, die zweite Frequenzbereichsressource auf die erste Weise zu bestimmen.

4. Verfahren gemäß einem der Ansprüche 1 bis 3, wobei
die zweite Frequenzbereichsressource mindestens eines der Folgenden umfasst: einen Bandbreitenteil, BWP ("Bandwidth Part"), einen Träger, einen Unterträger oder ein Teilband.

5. Verfahren gemäß einem der Ansprüche 1 bis 4, wobei
eine Frequenzbereichsressourcen-Änderungszeit, die der Frequenzbereichsressourcen-Umschaltung entspricht, eine Zeit, die für die Änderung der Frequenzbereichsressource erforderlich ist, und eine Funkressourcensteuerungs-Rekonfigurationszeit, RRC("Radio Resource Control")-Rekonfigurationszeit umfasst; und/oder
eine Frequenzbereichsressourcen-Änderungszeit, die der Frequenzbereichsressourcen-Neuabstimmung entspricht, eine Zeit umfasst, die zum Ändern der Frequenzbereichsressource erforderlich ist.

6. Ressourcenbestimmungsverfahren, umfassend:
Senden (201), über eine erste Frequenzbereichsressource, von ersten Anzeigeinformationen, wobei die ersten Anzeigeinformationen einer Endgerätvorrichtung anzeigen, eine zweite Frequenzbereichsressource auf eine erste Weise zu bestimmen, die zweite Frequenzbereichsressource die Frequenzbereichsressource ist, die auf die erste Weise bestimmt wird, die erste Weise eines von Frequenzbereichsressourcenumschaltung, Frequenzbereichsressourcen-Neuabstimmung, Frequenzsprung, eine Weise A und/oder eine Weise B umfasst, die Weise A die Frequenzbereichsressourcenumschaltung und den Frequenzsprung umfasst und die Weise B die Frequenzbereichsressourcen-Neuabstimmung und den Frequenzsprung umfasst; und
Kommunizieren (202) mit der Endgerätvorrichtung über die zweite Frequenzbereichsressource;
wobei die ersten Anzeigeinformationen verwendet werden, um einen Parameter der zweiten Frequenzbereichsressource anzuzeigen, und die ersten Anzeigeinformationen einer Endgerätvorrichtung anzeigen, eine zweite Frequenzbereichsressource auf eine erste Weise zu bestimmen, was Folgendes umfasst:
der Parameter der zweiten Frequenzbereichsressource zeigt der Endgerätvorrichtung an, die zweite Frequenzbereichsressource auf die erste Weise zu bestimmen;
wobei der Parameter der zweiten Frequenzbereichsressource ein Index der zweiten Frequenzbereichsressource ist;
der Parameter der zweiten Frequenzbereichsressource aus Ortsanzeigeinformationen der zweiten Frequenzbereichsressource besteht;
der Parameter der zweiten Frequenzbereichsressource ein Frequenzsprungintervall ist;
der Parameter der zweiten Frequenzbereichsressource ein Index der zweiten Frequenzbereichsressource und ein Frequenzsprungintervall ist, wobei das Frequenzsprungintervall verwendet wird, um anzuzeigen, einen Frequenzsprung innerhalb der zweiten Frequenzbereichsressource durchzuführen; oder
der Parameter der zweiten Frequenzbereichsressource aus Ortsanzeigeinformationen der zweiten Frequenzbereichsressource und einem Frequenzsprungintervall besteht, wobei das Frequenzsprungintervall verwendet wird, um anzuzeigen, einen Frequenzsprung innerhalb der zweiten Frequenzbereichsressource durchzuführen.

7. Verfahren gemäß Anspruch 6, wobei die ersten Anzeigeinformationen Abwärtsstrecken-Steuerungsinformationen, DCI ("Downlink Control Information"), sind.

8. Verfahren gemäß Anspruch 6 oder 7, wobei die ersten Anzeigeinformationen einer Endgerätvorrichtung anzeigen, eine zweite Frequenzbereichsressource auf eine erste Weise zu bestimmen, was Folgendes umfasst:
die ersten Anzeigeinformationen werden verwendet, um eine erste Dauer anzuzeigen, und der Endgerätvorrichtung wird basierend auf der ersten Dauer und einem ersten Schwellenwert angezeigt, die zweite Frequenzbereichsressource auf die erste Weise zu bestimmen.

9. Verfahren gemäß einem der Ansprüche 6 bis 8, wobei die zweite Frequenzbereichsressource mindestens eines der folgenden umfasst: einen Bandbreitenteil, BWP ("Bandwidth Part"), einen Träger, einen Unterträger oder ein Teilband.

10. Verfahren gemäß einem der Ansprüche 6 bis 9, wobei
eine Frequenzbereichsressourcen-Änderungszeit, die der Frequenzbereichsressourcen-Umschaltung entspricht, eine Zeit, die für die Änderung der Frequenzbereichsressource erforderlich ist, und eine Funkressourcensteuerungs-Rekonfigurationszeit, RRC("Radio Resource Control")-Rekonfigurationszeit umfasst; und/oder
eine Frequenzbereichsressourcen-Änderungszeit, die der Frequenzbereichsressourcen-Neuabstimmung entspricht, eine Zeit umfasst, die zum Ändern der Frequenzbereichsressource erforderlich ist.

11. Kommunikationseinrichtung, die Module umfasst, die dafür ausgelegt sind, das Verfahren gemäß einem der Ansprüche 1 bis 5 oder 6 bis 10 durchzuführen.

## Revendications

1. Procédé de détermination de ressource, comprenant :
la réception (201), sur une première ressource de domaine de fréquence, de premières informations d'indication, dans lequel les premières informations d'indication indiquent à un dispositif de terminal de déterminer une seconde ressource de domaine de fréquence d'une première manière, la seconde ressource de domaine de fréquence est la ressource de domaine de fréquence déterminée de la première manière, la première manière comprend l'un parmi une commutation de ressource de domaine de fréquence, un retour de ressource de domaine de fréquence, un saut de fréquence, une manière A, et/ou une manière B, la manière A comprend la commutation de ressource de domaine de fréquence et le saut de fréquence, et la manière B comprend le retour de ressource de domaine de fréquence et le saut de fréquence ; et
la communication (202) avec un dispositif de réseau sur la seconde ressource de domaine de fréquence déterminée ;
dans lequel les premières informations d'indication sont utilisées pour indiquer un paramètre de la seconde ressource de domaine de fréquence, et le fait que les premières informations d'indication indiquent à un dispositif de terminal de déterminer une seconde ressource de domaine de fréquence d'une première manière comprend :
le paramètre de la seconde ressource de domaine de fréquence indique au dispositif de terminal de déterminer la seconde ressource de domaine de fréquence de la première manière ;
dans lequel
le paramètre de la seconde ressource de domaine de fréquence est un indice de la seconde ressource de domaine de fréquence ;
le paramètre de la seconde ressource de domaine de fréquence est constitué d'informations d'indication d'emplacement de la seconde ressource de domaine de fréquence ;
le paramètre de la seconde ressource de domaine de fréquence est un intervalle de saut de fréquence ;
le paramètre de la seconde ressource de domaine de fréquence est un indice de la seconde ressource de domaine de fréquence et un intervalle de saut de fréquence, dans lequel l'intervalle de saut de fréquence est utilisé pour indiquer de réaliser un saut de fréquence à l'intérieur de la seconde ressource de domaine de fréquence ; ou
le paramètre de la seconde ressource de domaine de fréquence est constitué d'informations d'indication d'emplacement de la seconde ressource de domaine de fréquence et d'un intervalle de saut de fréquence, dans lequel l'intervalle de saut de fréquence est utilisé pour indiquer de réaliser un saut de fréquence à l'intérieur de la seconde ressource de domaine de fréquence.

2. Procédé selon la revendication l, dans lequel les premières informations d'indication sont des informations de commande de liaison descendante, « Downlink Control Information », DCI.

3. Procédé selon la revendication 1 ou 2, dans lequel le fait que les premières informations d'indication indiquent à un dispositif de terminal de déterminer une seconde ressource de domaine de fréquence d'une première manière comprend :
les premières informations d'indication sont utilisées pour indiquer une première durée, et il est indiqué au dispositif de terminal, sur la base de la première durée et d'un premier seuil, de déterminer la seconde ressource de domaine de fréquence de la première manière.

4. Procédé selon l'une quelconque des revendications 1 à 3, dans lequel la seconde ressource de domaine de fréquence comprend au moins un de ce qui suit : une partie de largeur de bande, BWP, une porteuse, une sous-porteuse, ou une sous-bande.

5. Procédé selon l'une quelconque des revendications 1 à 4, dans lequel
un temps de changement de ressource de domaine de fréquence correspondant à la commutation de ressource de domaine de fréquence comprend un temps nécessaire pour changer la ressource de domaine de fréquence et un temps de reconfiguration de commande de ressource radio, « Radio Resource Control », RRC ; et/ou
un temps de changement de ressource de domaine de fréquence correspondant au retour de ressource de domaine de fréquence comprend un temps nécessaire pour changer la ressource de domaine de fréquence.

6. Procédé de détermination de ressource, comprenant :
l'envoi (201), sur une première ressource de domaine de fréquence, de premières informations d'indication, dans lequel les premières informations d'indication indiquent à un dispositif de terminal de déterminer une seconde ressource de domaine de fréquence d'une première manière, la seconde ressource de domaine de fréquence est la ressource de domaine de fréquence déterminée de la première manière, la première manière comprend l'un parmi une commutation de ressource de domaine de fréquence, un retour de ressource de domaine de fréquence, un saut de fréquence, une manière A, et/ou une manière B, la manière A comprend la commutation de ressource de domaine de fréquence et le saut de fréquence, et la manière B comprend le retour de ressource de domaine de fréquence et le saut de fréquence ; et
la communication (202) avec le dispositif de terminal sur la seconde ressource de domaine de fréquence ;
dans lequel les premières informations d'indication sont utilisées pour indiquer un paramètre de la seconde ressource de domaine de fréquence, et le fait que les premières informations d'indication indiquent à un dispositif de terminal de déterminer une seconde ressource de domaine de fréquence d'une première manière comprend :
le paramètre de la seconde ressource de domaine de fréquence indique au dispositif de terminal de déterminer la seconde ressource de domaine de fréquence de la première manière ; dans lequel
le paramètre de la seconde ressource de domaine de fréquence est un indice de la seconde ressource de domaine de fréquence ;
le paramètre de la seconde ressource de domaine de fréquence est constitué d'informations d'indication d'emplacement de la seconde ressource de domaine de fréquence ;
le paramètre de la seconde ressource de domaine de fréquence est un intervalle de saut de fréquence :
le paramètre de la seconde ressource de domaine de fréquence est un indice de la seconde ressource de domaine de fréquence et un intervalle de saut de fréquence, dans lequel l'intervalle de saut de fréquence est utilisé pour indiquer de réaliser un saut de fréquence à l'intérieur de la seconde ressource de domaine de fréquence ; ou
le paramètre de la seconde ressource de domaine de fréquence est constitué d'informations d'indication d'emplacement de la seconde ressource de domaine de fréquence et d'un intervalle de saut de fréquence, dans lequel l'intervalle de saut de fréquence est utilisé pour indiquer de réaliser un saut de fréquence à l'intérieur de la seconde ressource de domaine de fréquence.

7. Procédé selon la revendication 6, dans lequel les premières informations d'indication sont des informations de commande de liaison descendante, « Downlink Control Information », DCI.

8. Procédé selon la revendication 6 ou 7, dans lequel le fait que les premières informations d'indication indiquent à un dispositif de terminal de déterminer une seconde ressource de domaine de fréquence d'une première manière comprend :
les premières informations d'indication sont utilisées pour indiquer une première durée, et il est indiqué au dispositif de terminal, sur la base de la première durée et d'un premier seuil, de déterminer la seconde ressource de domaine de fréquence de la première manière.

9. Procédé selon l'une quelconque des revendications 6 à 8, dans lequel la seconde ressource de domaine de fréquence comprend au moins un de ce qui suit : une partie de largeur de bande, BWP, une porteuse, une sous-porteuse, ou une sous-bande.

10. Procédé selon l'une quelconque des revendications 6 à 9, dans lequel un temps de changement de ressource de domaine de fréquence correspondant à la commutation de ressource de domaine de fréquence comprend un temps nécessaire pour changer la ressource de domaine de fréquence et un temps de reconfiguration de commande de ressource radio, « Radio Resource Control », RRC ; et/ou
un temps de changement de ressource de domaine de fréquence correspondant au retour de ressource de domaine de fréquence comprend un temps nécessaire pour changer la ressource de domaine de fréquence.

11. Appareil de communication, comprenant des modules configurés pour réaliser le procédé selon l'une quelconque des revendications 1 à 5 ou des revendications 6 à 10.
